# EUROPEAN PATENT SPECIFICATION

(11) **EP 2 535 607 B1**
(45) Date of publication and mention of the grant of the patent: **23.04.2014**
(21) Application number: 11305760.8
(22) Date of filing: 17.06.2011
(51) Int. Cl.: F16C 19/18, F16C 27/04, F01D 25/16, F02C 6/12

(54) **Turbocharger, notably for a combustion engine**
Turbolader, insbesondere für einen Verbrennungsmotor
Turbocompresseur, notamment pour moteur à combustion

(43) Date of publication of application: 19.12.2012
(73) Proprietor: Aktiebolaget SKF, 415 50 Göteborg (SE)
(72) Inventor: Viault, Samuel, 37360 SAINT-ANTOINE-DU-ROCHER (FR); Wensing, Jeoren, 3991 WP HOUTEN (NL); Berruet, Nicolas, 37360 NEUILLE-PONT-PIERRE (FR); Corbett, Richard, 37230 FONDETTES (FR)
(74) Representative: Casalonga, Axel

(56) References cited:
- EP-A1- 2 282 072
- DE-C1- 4 237 190
- FR-A- 1 396 802
- GB-A- 1 430 864
- GB-A- 2 123 497
- GB-A- 191 204 270
- US-A1- 2002 039 461

## Description

The present invention relates to the field of turbochargers, and in particular those used in combustion engines for automotive vehicles.

Such a turbocharger is known from FR 1 396 802 A.

In such application, a turbocharger is used to enhance the combustion engine performance by blowing compressed air into the cylinders of said engine.

A turbocharger generally comprises a housing, a shaft extending through an opening formed on the housing, a turbine wheel mounted on a first end portion of the shaft and located in an exhaust gases passage of the combustion engine, a compressor wheel mounted on an opposite second end portion of said shaft and located in an admission gases passage of the engine, and rolling bearings disposed between the shaft and the housing. When the turbine wheel is rotated by the flow of the exhaust gases, the shaft and the compressor wheel are rotated which leads to a compression of the admission gases introduced into the cylinders of the combustion engine.

European patent application EP-A2-2 042 758 discloses a turbocharger comprising a pair of rolling bearings disposed between the shaft and an intermediate bearing casing mounted into the bore of the housing. Said casing is equipped with damper rings to reduce the transmission of vibrations emitted by the turbine and compression wheels.

This leads to a complex structure of the turbocharger as well as an increase of the mounting cost.

One aim of the present invention is therefore to overcome the aforementioned drawbacks.

It is a particular object of the present invention to provide a turbocharger which is simple to manufacture and economic while guaranteeing good damping properties.

According to an aspect of the present invention, there is provided a turbocharger according to claim 1.

In one embodiment, the damping means are distinct from the outer ring. The damping means may cover at least partly the outer surface of the outer ring.

In one embodiment, the axial length of the rolling bearing ranges between 30% and 95% of the axial dimension of the housing, and preferably ranges between 70% and 80%.

The present invention and its advantages will be better understood by studying the detailed description of specific embodiments given by way of non-limiting examples and illustrated by the appended drawings on which:
- Figure 1 is an axial section of a turbocharger according to a first example,
- Figure 2 is an axial section of a rolling bearing of the turbocharger of Figure 1,
- Figure 3 is an axial section of a rolling bearing for a turbocharger according to an example of the invention,
- Figure 4 is an axial section of a rolling bearing for a turbocharger according to another example,
- Figure 5 is a perspective view of a damping ring of the rolling bearing of Figure 4,
- Figures 6 and 7 are perspective views of damping rings of a rolling bearing for a turbocharger according to another examples,
- Figure 8 is an axial section of a turbocharger according to another example,
- Figure 9 is an axial section of a rolling bearing of the turbocharger of Figure 8, and
- Figures 10 and 11 are axial sections of a rolling bearing for a turbocharger according to another examples.

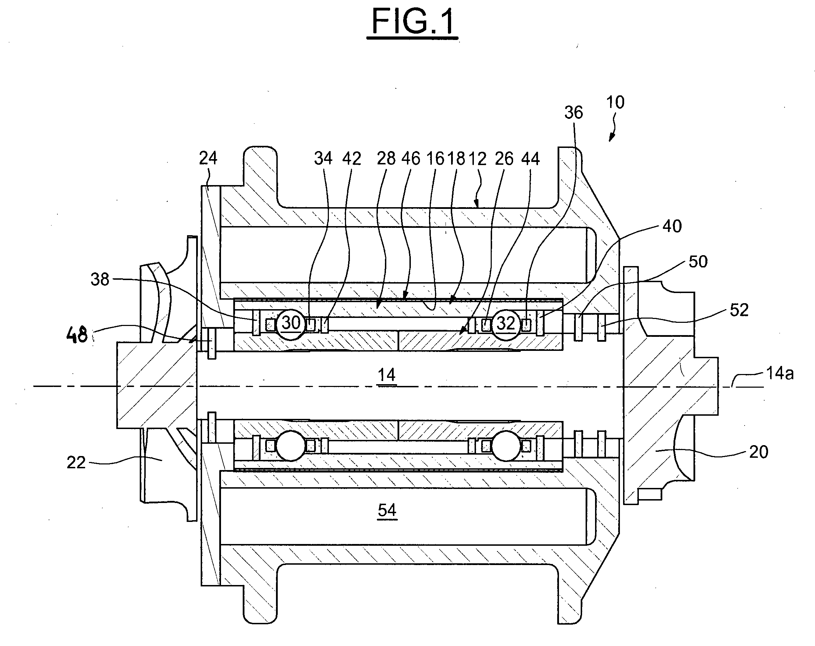

As illustrated on the Figure 1, which illustrates a turbocharger 10 according to an example, the turbocharger comprises a housing 12, a shaft 14 extending along a longitudinal axis 14a through a cylindrical bore or opening 16 of the housing, a rolling bearing 18 mounted onto the shaft 14 and disposed into the bore 16, a turbine wheel 20 fixed at one end of the shaft 14 and a compressor wheel 22 fixed at an opposite end of said shaft. The turbocharger 10 also comprises a cap 24 fixed at an axial end of the housing 12. In the disclosed embodiment, the axial length of the rolling bearing 18 ranges between 60% and 90% of the axial dimension of the bore 16 of the housing, and more precisely between 70% and 80%.

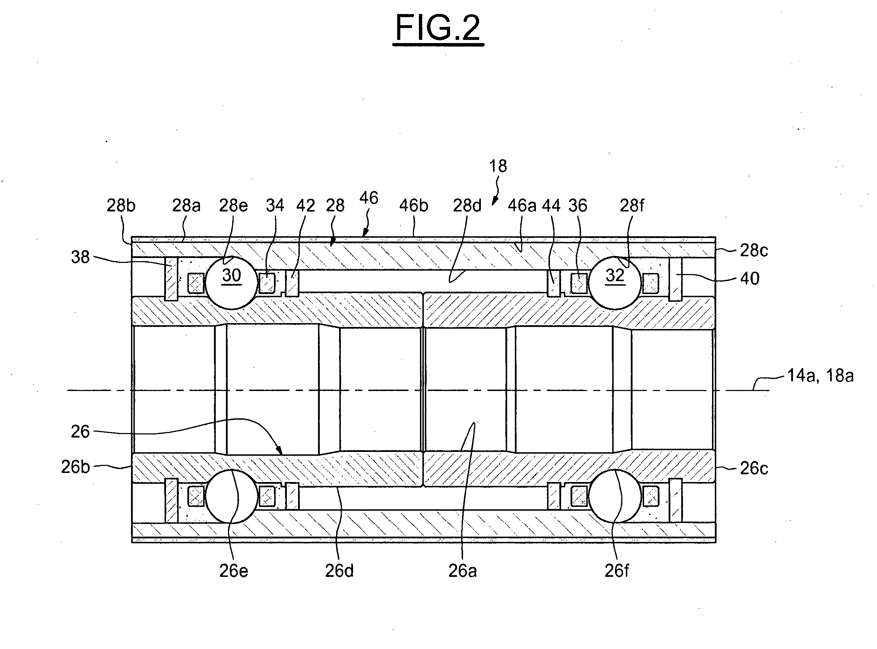

As shown more clearly on Figure 2, the rolling bearing 18 comprises an inner ring 26 and an outer ring 28 between which are housed two rows of rolling elements 30 and 32, which in this case are balls, two annular cages 34, 36 respectively maintaining the circumferential spacing of the rolling elements 30, 32, two annular outer sealing rings 38, 40 and two annular inner sealing rings 42, 44. The axis 18a of the rolling bearing is coaxial with the axis 14a of the shaft of the turbocharger.

The inner and outer rings 26, 28 are concentric and symmetric with respect to a transverse radial plane passing through the centre of the rolling bearing. The rings 26, 28 are of the solid type. A "solid ring" is to be understood as a ring obtained by machining with removal of material (by machining, grinding) from metal tube stock, bar stock, rough forgings and/or rolled blanks.

The outer ring 28 comprises an outer cylindrical surface 28a delimited by opposite radial lateral surfaces 28b, 28c which respectively axially come into contact with the cap 24 and a radial shoulder of the housing 12. The outer ring 28 also comprises a bore 28d of cylindrical shape from which are formed toroidal raceways 28e, 28f having in cross-section a concave internal profile adapted to the rolling elements 30, 32. The raceways 28e, 28f are symmetrical with respect to the transverse radial plane passing through the centre of the rolling bearing.

In the disclosed example, the inner ring 26 is made in two parts which are identical, symmetrical with respect to the transverse radial plane of symmetry of the rolling bearing and mounted axially fixedly one against the other. The inner ring 26 is here composed of two identical half-rings. Alternatively, the inner ring may be made into one part. The inner ring 26 has a bore 26a of cylindrical shape into which the shaft 14 (Figure 1) is mounted. Said bore is delimited by opposite radial lateral surfaces 26b and 26c, which are respectively coplanar with the lateral surfaces 28b, 28c of the outer ring. The radial surface 26c axially bears against a radial shoulder of the shaft 14. The inner ring 26 also comprises an exterior cylindrical surface 26d onto which first and second toroidal circular raceways 26e, 26f are formed. The said raceways have in cross-section a concave internal profile adapted to the rolling elements 30 and 32, the said raceways being directed radially outwards. The raceways 26e, 26f are symmetrical with respect to the transverse radial plane passing through the centre of the rolling bearing.

The inner ring 26 also comprises two annular outer grooves (not referenced) formed radially towards the inside from the exterior surface 26d, respectively in the vicinity of the radial surfaces 26b and 26c, and two annular inner grooves (not referenced) also formed radially towards the inside from the exterior surface 26d. The outer grooves, respectively the inner grooves, are symmetrical with one another relative to the transverse radial plane of symmetry of the rolling bearing. Inside the grooves are fixedly mounted the annular outer and inner sealing rings 38, 40 and 42, 44. The sealing rings 38 to 44 are disposed radially between the inner and outer rings 26, 28. Each sealing ring extends radially towards the outer ring 28 and comes into sliding contact with the bore 28d of said ring. Alternatively, the sealing rings may remain at a small distance from said bore. The sealing rings 38 to 44 are made from metal, advantageously from a thin metal sheet blank. Alternatively, the sealing rings may be made by moulding a synthetic material such as an elastomer. The sealing rings 38 to 44 are continuous in the circumferential direction. To facilitate their fitting into the grooves of the inner ring, each of the sealing rings may alternatively be open at a point of its circumference.

The sealing ring 38 is axially situated on the compressor wheel side and the sealing ring 40 on the turbine wheel side. The sealing ring 38 is located axially between the row of rolling elements 30 and the radial surfaces 26b, 28b of the inner and outer rings, the sealing ring 40 being mounted axially between the row of rolling elements 32 and the radial surfaces 26c, 28c of said rings. The inner sealing rings 42, 44 each delimit together with the inner and outer rings 26, 28 and the corresponding outer sealing ring 38, 40 a closed space for each row of rolling elements 30, 32 and the associated cages 34, 36. Each closed space is filled with a lubricant. Alternatively, it may also be possible to not foresee the inner sealing rings 42, 44 and to delimit a single closed space between the rings 26, 28 and the sealing rings 38, 40 in which the rolling elements 30, 32 and the associated cages 34, 36 are housed so as to be protected against external polluting elements.

The rolling bearing 18 further comprises an annular damping sleeve 46 mounted on the outer surface 28a of the outer ring and coming radially into contact with the bore 16 (Figure 1) of the housing. The damping sleeve 46 is made from elastic material having good vibration-damping properties, for example an elastomer such as nitrile rubber or polyurethane. The damping sleeve 46 may be overmoulded onto the outer surface 28a. Alternatively, the damping sleeve 46 may be attached on the outer ring 28 by any other suitable fixing means, for example by gluing. The damping sleeve 46 comprises a cylindrical bore 46a into which the outer ring 28 is directly mounted and an exterior surface 46b mounted radially into contact with the bore 16 of the housing. In the disclosed embodiment, the damping sleeve 46 recovers the entire length of the outer surface 28a of the outer ring.

The outer surface 28a of the outer ring comprises the damping sleeve 46 which isolates said outer ring from the bore 16 of the housing. The damping sleeve 46 enables to damp the vibrations emitted by the rotation of the turbine and compressor wheels 20, 22. The transmission of the vibrations emitted by said wheels to the housing 12 is thus limited.

As shown on Figure 1, the turbocharger 10 is further provided with a sealing ring 48 mounted radially between the shaft 14 and the cap 24 and axially disposed between the compressor wheel 22 and the rolling bearing 18, and with two sealing rings 50, 52 disposed radially between the shoulder of said shaft 14 and the bore 16 of housing and axially mounted between the rolling bearing 18 and the turbine wheel 20. The sealing rings 48 to 52 are fitted into grooves (not referenced) provided on the exterior surface of the shaft 14 and come into sliding contact with the cap 24 or the housing 12. The sealing rings 48 to 50 may be made from metal.

In the disclosed example, the housing 12 comprises a longitudinal cooling channel 54 extending from a radial end surface of said housing against which the cap 24 is mounted. The cooling channel 54 extends axially further than the outer ring 28 of the rolling bearing and ends in the vicinity of a radial end surface of the housing located on the turbine wheel side. The cooling channel 54 is closed by the cap 24. The cooling channel 54 formed within the housing 12 is annular and radially surrounds the rolling bearing 18 on its entire length. The cooling channel 54 delimits on the housing 12 an inner axial portion comprising the bore 16 inside which is fitted the damping sleeve of the rolling bearing and an outer axial portion which is concentric with said inner portion. A cooling fluid (not shown), such as water, can be introduced into the cooling channel 54.

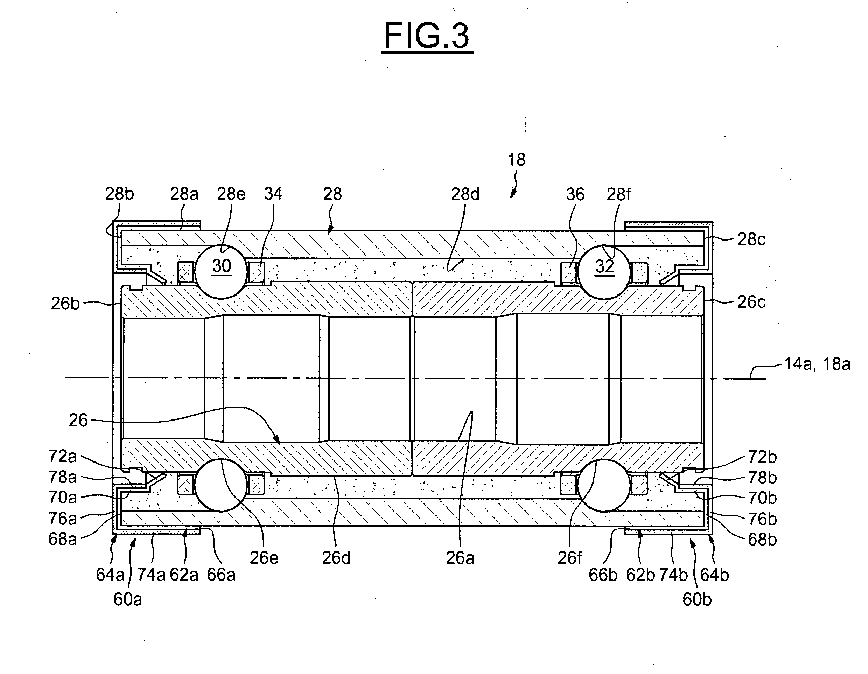

The rolling bearing 18 for turbocharger disclosed in the embodiment of the invention shown on Figure 3, in which identical parts are given identical references, comprises two identical annular damping means 60a, 60b mounted onto the outer surface 28a of the outer ring. The damping means 60a, 60b are identical and symmetrical with respect to the radial transverse plane of symmetry of the rolling bearing. Since the damping means 60a, 60b are identical in this example, only one of them, having the reference "a", will be described here, it being understood that the identical elements of the other damping means have the reference "b".

The damping means 60a comprise an annular elastic element 62a mounted on the outer ring 28 and a stiffening element 64a mounted on said elastic element. The elastic element 62a is made from elastic material, for example an elastomer such as nitrile rubber or polyurethane. The elastic element 62a comprises an annular outer axial portion 66a mounted on the outer surface 28a of the outer ring and extended radially inwards by an annular radial portion 68a which covers the radial surface 28b of the outer ring and extends towards the inner ring while remaining at distance from said ring. The elastic element 62a is further provided with an annular inner axial portion 70a extending from a small edge of the radial portion 68a axially inwards toward the row of rolling elements 30, and with a friction lip 72a extending from an inner edge of said axial portion 70a and coming into permanent friction contact with the exterior surface 26d of the inner ring to limit ingress of foreign matter. The friction lip 72a extends obliquely inwards and is axially located between the cage 34 and the radial surface 26b of the inner ring.

The annular stiffening element 64a is made of a material more rigid than the material of the elastic element 62a. The stiffening element 64a may advantageously be made from metal, for example from a thin metal sheet blank. The stiffening element 64a comprises an annular outer axial portion 74a mounted on the outer axial portion 66a of the elastic element and adapted to come radially into contact with the bore of the housing of the turbocharger. The stiffening element 64 further comprises an annular inner axial portion 78a and an annular radial portion 76a connected to the axial portions 74a, 78a. Said portions are respectively mounted on the inner axial portion 70a and on the radial portion 68a of the elastic element.

The damping means 60a, 60b delimit together with the inner and outer rings 26, 28 a closed space inside which the rolling elements 30, 32 and the cages 34, 36 are housed so as to be protected against external polluting elements. The closed space is delimited radially by the exterior surface 26d of the inner ring and the bore 28d of the outer ring, and axially by the damping means 60a, 60b. The closed space is here filled with a lubricant. The sealing lips 72a, 72b disposed radially between the inner and outer rings 26, 28 also enable to damp the vibrations emitted during rotation of the shaft supporting the turbine and the compressor wheels.

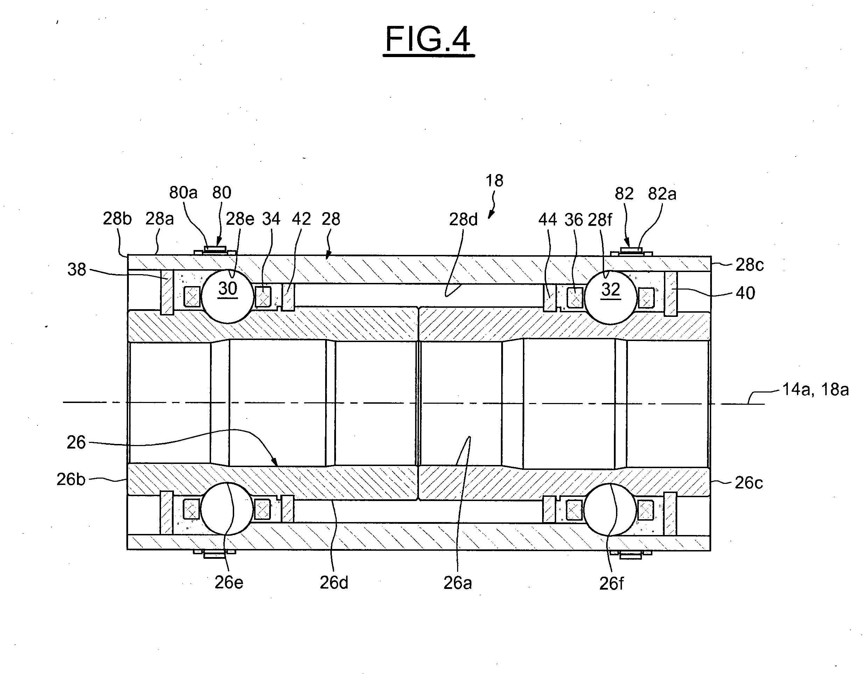

The rolling bearing 18 for turbocharger disclosed in the example shown on Figure 4, in which identical parts are given identical references, comprises two annular damping rings 80, 82 mounted on the outer surface 28a of the outer ring. The damping rings 80, 82 are identical and symmetrical with respect to the transverse radial plane passing through the centre of the rolling bearing. The damping rings 80, 82 are each made in one part from metal. Alternatively, the damping rings 80, 82 may be formed from elastic material, for example an elastomer such as nitrile rubber or polyurethane.

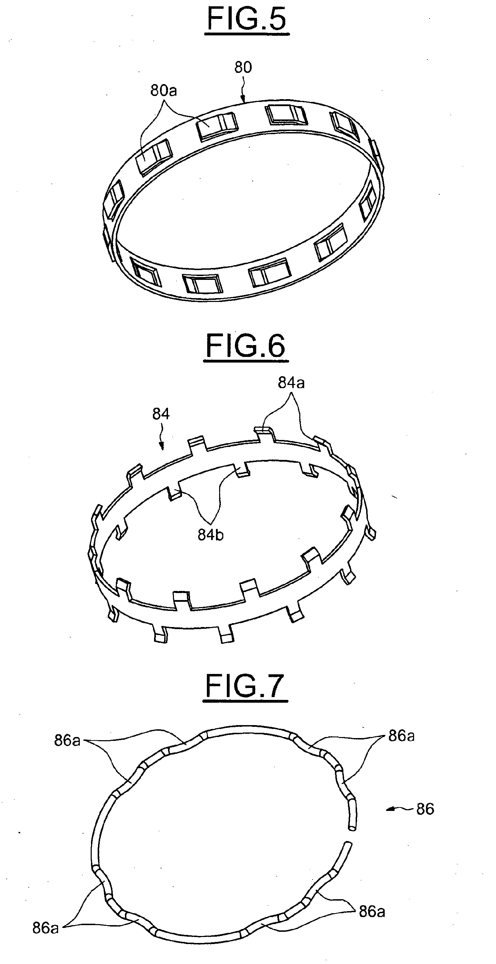

As more clearly shown on Figure 5, the damping ring 80 comprises a plurality of elastic tongues 80a made by cutting, extending in the circumferential direction and radially flexible. The tongues 80a are spaced apart from one another in the circumferential direction. The elastic tongues 80a protrude radially outwards from the outer surface of the damping ring. The bore of each damping rings 80, 82 is fitted on the outer surface 28a of the outer ring, the outer surface of the elastic tongues 80a, 82a being adapted to come into contact with the bore of the housing of the turbocharger and enabling to damp the vibrations emitted by the rotation of the shaft of the turbocharger onto which is mounted the inner ring 26.

In another example, the damping rings mounted on the outer surface 28a of the outer ring may have different shapes. For example, on the example shown on Figure 6, an annular damping ring 84 comprises first elastic tongues 84a extending from a radial surface delimiting axially the ring and second elastic tongues 84b extending from the opposite radial surface of the ring. The tongues 84a, 84b are spaced apart from one another in the circumferential direction. The damping ring 84 is made in one part. The elastic tongues 84a extend radially inwards in order to come into contact with the outer surface of the outer ring, the elastic tongues 84b extending radially outwards to come into contact with the bore of the housing of the turbocharger. In another example, as shown on Figure 7, an elastic damping ring 86 comprises a plurality of pair of corrugated deformations 86a extending radially inwards. The damping ring 86 is adapted to isolate the outer surface of the outer ring of the rolling bearing from the bore of the housing of the turbocharger. In the last two embodiments, the damping rings may be made from metal or from elastic material.

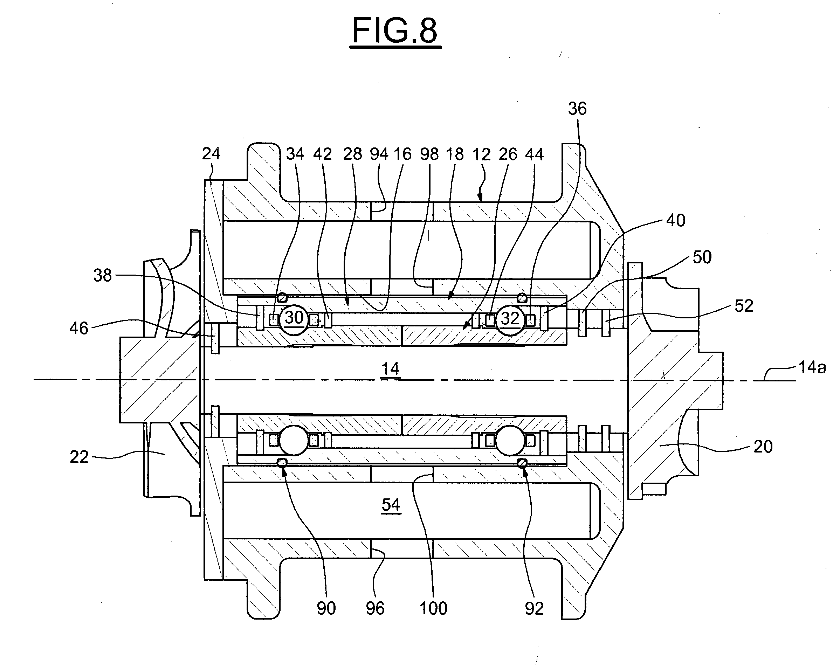

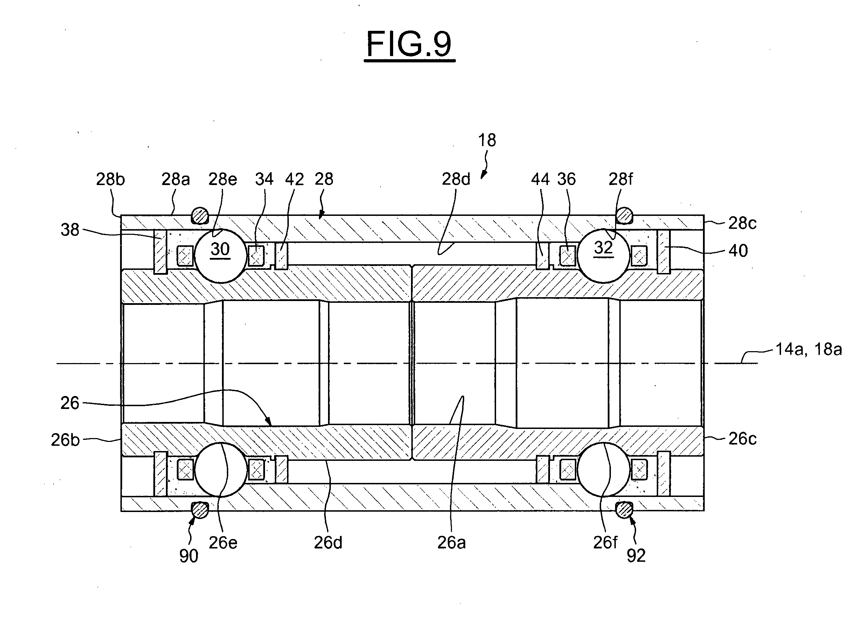

The turbocharger 10 illustrated on Figure 8, in which identical parts are given identical references, differs from the turbocharger disclosed in the first example in that the rolling bearing 18 comprises two annular damping rings 90, 92 mounted into grooves (not referenced) formed on the outer surface 28a of the outer ring, which protrude radially with respect to said surface and come into contact with the bore 16 of the housing. The damping rings 90, 92 are identical and have in cross-section a circular profile. The damping rings 90, 92 are made from elastic material, for example an elastomer such as nitrile rubber or polyurethane. The rolling bearing 18 is shown more clearly on Figure 9.

In the disclosed example, the housing 12 also comprises inlet and outlet orifices 94, 96 formed by radial passages, made in the thickness of the outer axial portion of said housing and diametrically opposed. The inlet and outlet orifices 94, 96 extend from the outer surface of the housing 12 and open into the cooling channel 54 to communicate with said channel. The housing 12 further comprises radial passages 98, 100 provided into the thickness of the inner axial portion of said housing. The radial passages 98, 100 extend from the cooling channel 54 and pass through the thickness of the inner axial portion of the housing and open into the bore 16 and into an annular space existing between the outer surface 28a of the outer ring and said bore. Said annular space communicates with the cooling channel 54 via the radial passages 98, 100.

In this example, the cooling fluid (not shown) passing through the cooling channel 54 is also supplied into the radial space defined between the housing and the outer ring 28 of the rolling bearing. The cooling fluid is in direct contact with the outer ring 28, thereby causing an increase of the cooling effect for the rolling bearing. Besides, the cooling fluid disposed into said radial space may also enable to enhance the damping effect. The annular damping rings 90, 92 also prevent an escape of the cooling fluid. In the previous examples shown on Figures 2 to 7, the radial space defined between the outer surface 28a of the outer ring and the bore 16 of the housing may also be used as a damping space filled with cooling fluid.

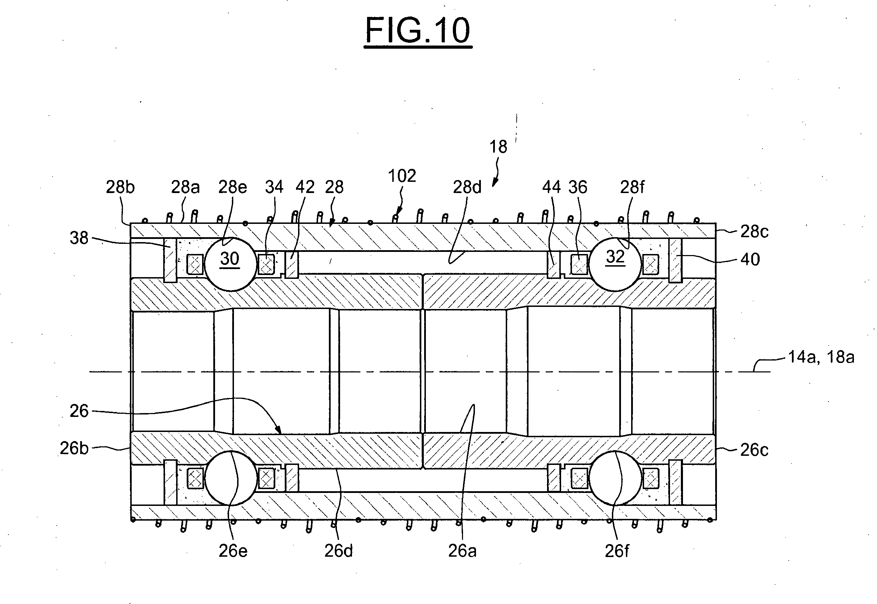

The rolling bearing 18 for turbocharger disclosed in the example shown on Figure 10, in which identical parts are given identical references, differs from the first example in that a helical spring 102 extending over the entire length of the outer surface 28a is provided in order to isolate the rolling bearing from the housing. The helical spring 102 comprises coils of different diameters. The coils of small diameter come into contact with the outer surface 28a of the outer ring, the coils of large diameter being adapted to press against the bore of the housing.

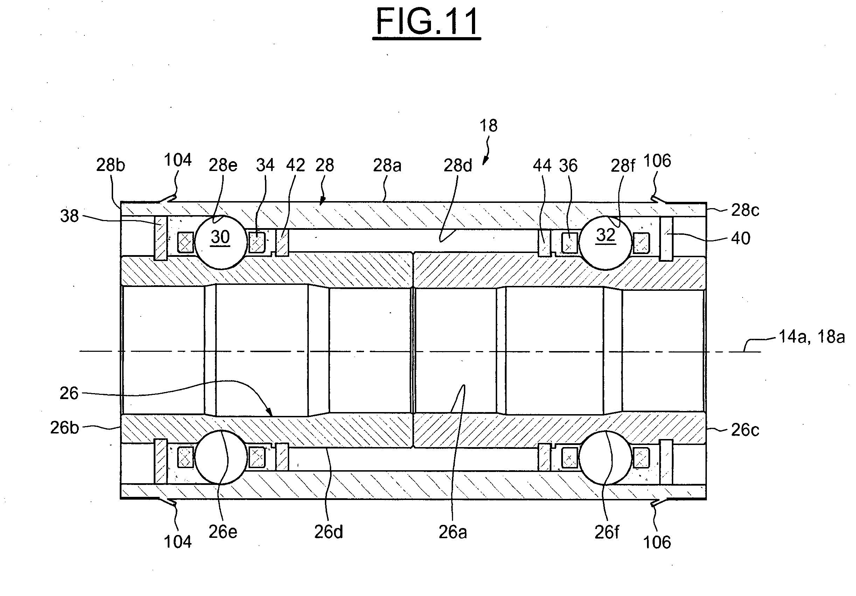

In the example shown on Figure 11, in which identical parts are given identical references, elastic tongues 104, 106 are formed on the outer surface 28a of the outer ring by local plastic deformations. The tongues 104, 106 extend radially towards the outside and are adapted to come into contact with the bore of the housing. The tongue 104, 106 may be obtained by stamping. The tongues 104 are formed from the radial surface 28b of the outer ring, the tongues 106 being formed from the radial surface 28c. The tongues 104, 106 are spaced apart from one another in the circumferential direction.

The invention applies not only to turbocharger comprising an angular contact ball rolling bearing with a double rows of balls but also to turbocharger comprising other types of rolling bearing, for example rolling bearing having four points contact and/or with a single row of balls or with at least three rows of balls.

Furthermore, the invention applies to rolling bearings comprising a plurality of inner rings and/or a plurality of outer rings. Finally, it has to be made clear that by a turbocharger it is also meant a waste heat recovery turbine, a turbocompound or a compressor.

## Claims

1. Turbocharger comprising a shaft (14), a housing (12), a turbine wheel (20) and a compressor wheel (22) mounted onto the shaft, at least a rolling bearing (18) disposed between the shaft and the housing and comprising an inner ring (26), an outer ring (28) and at least one row of rolling elements (30) disposed between raceways provided on the rings, and two elastic damping means (60a, 60b) adapted to damp vibrations emitted during rotation of the shaft, said damping means being provided on an outer surface (28a) of the outer ring and coming into contact with a bore (16) of the housing, **characterized in that** each damping means (60a, 60b) comprise an elastic element (62a, 62b) and a stiffening element (74a, 74b) made of a material more rigid than the material of the elastic element and mounted on said elastic element, said elastic element further comprising at least a sealing lip (72a, 72b) bearing against an exterior surface (26d) of the inner ring, and **in that** the damping means (60, 60b) delimit together with the inner and outer rings (26, 28) a closed space inside which the rolling elements (30) are housed and which is filled with a lubricant.

2. Turbocharger according to claim 1, wherein the damping means (60a, 60b) are distinct from the outer ring.

3. Turbocharger according to claim 1 or 2, wherein the damping means (60a, 60b) cover at least partly the outer surface (28a) of the outer ring.

4. Turbocharger according to any of the preceding claims, wherein the axial length of the rolling bearing (18) ranges between 30% and 95% of the axial dimension of the housing (12), and preferably ranges between 70% and 80%.

## Patentansprüche

1. Turbolader, der Folgendes umfasst: eine Welle (14), ein Gehäuse (12), ein Turbinenrad (20) und ein Verdichterrad (22), die auf der Welle angebracht sind, wenigstens ein Wälzlager (18), das zwischen der Welle und dem Gehäuse angeordnet ist und einen inneren Ring (26), einen äußeren Ring (28) und wenigstens eine Reihe von Wälzelementen (30), die zwischen an den Ringen bereitgestellten Laufringen angeordnet sind, und zwei elastische Dämpfungsmittel (60a, 60b), die dafür eingerichtet sind, die während der Drehung der Welle abgegebenen Vibrationen zu dämpfen, wobei die Dämpfungsmittel auf einer Außenfläche (28a) des äußeren Rings bereitgestellt werden und in Berührung mit einer Bohrung (16) des Gehäuses kommen, **dadurch gekennzeichnet, dass** jedes Dämpfungsmittel (60a, 60b) ein elastisches Element (62a, 62b) und ein Versteifungselement (74a, 74b), das aus einem Werkstoff, der steifer ist als der Werkstoff des elastischen Elements, hergestellt und an dem elastischen Element angebracht ist, umfasst, wobei das elastische Element ferner wenigstens eine Abdichtungslippe (72a, 72b) umfasst, die an einer Außenfläche (26d) des inneren Rings anliegt, und dadurch, dass die Dämpfungsmittel (60a, 60b) zusammen mit dem inneren und dem äußeren Ring (26, 28) einen geschlossenen Raum begrenzen, innerhalb dessen die Wälzelemente (30) untergebracht sind und der mit einem Schmiermittel gefüllt ist.

2. Turbolader nach Anspruch 1, wobei die Dämpfungsmittel (60a, 60b) von dem äußeren Ring verschieden sind.

3. Turbolader nach Anspruch 1 oder 2, wobei die Dämpfungsmittel (60a, 60b) wenigstens teilweise die Außenfläche (28a) des äußeren Rings bedecken.

4. Turbolader nach einem der vorhergehenden Ansprüche, wobei sich die axiale Länge des Wälzlagers (18) zwischen 30 % und 95 % der axialen Abmessung des Gehäuses (12) erstreckt und sich vorzugsweise zwischen 70 % und 80 % erstreckt.

## Revendications

1. Turbocompresseur, comprenant un arbre (14), un carter (12), une roue de turbine (20) et une roue de compresseur (22) montées sur l'arbre, au moins un palier à roulement (18) disposé entre l'arbre et le carter et comprenant une bague intérieure (26), une bague extérieure (28) et au moins une rangée d'éléments de roulement (30) disposés entre des chemins de roulement prévus sur les bagues, et deux moyens d'amortissement élastiques (60a, 60b) prévus pour amortir les vibrations émises au cours de la rotation de l'arbre, lesdits moyens d'amortissement étant prévus sur une surface extérieure (28a) de la bague extérieure et venant en contact avec un alésage (16) du carter, **caractérisé en ce que** chaque moyen d'amortissement (60a, 60b) comprend un élément élastique (62a, 62b) et un élément de rigidification (74a, 74b) fabriqué en un matériau plus rigide que le matériau de l'élément élastique et monté sur ledit élément élastique, ledit élément élastique comprenant en outre au moins une lèvre d'étanchéité (72a, 72b) en appui contre une surface extérieure (26d) de la bague intérieure, et **en ce que** les moyens d'amortissement (60a, 60b) délimitent conjointement avec les bagues intérieure et extérieure (26, 28), un espace fermé à l'intérieur duquel les éléments de roulement (30) sont reçus et qui est rempli d'un lubrifiant.

2. Turbocompresseur selon la revendication 1, dans lequel les moyens d'amortissement (60a, 60b) sont distincts de la bague extérieure.

3. Turbocompresseur selon la revendication 1 ou 2, dans lequel les moyens d'amortissement (60a, 60b) couvrent au moins une en partie la surface extérieure (28a) de la bague extérieure.

4. Turbocompresseur selon l'une quelconque des revendications précédentes, dans lequel la longueur axiale du palier à roulement (18) est comprise entre 30 % et 95 % de la dimension axiale du carter (12), et de préférence est comprise entre 70 % et 80 %.
